# EUROPEAN PATENT APPLICATION

(11) **EP 1 640 491 A2**
(43) Date of publication of application: **29.03.2006**
(21) Application number: 05253040.9
(22) Date of filing: 18.05.2005
(51) Int. Cl.: D06F 37/20, D06F 37/30

(54) **Washing machine**

(30) Priority: 23.09.2004 KR 2004076576
(71) Applicant: SAMSUNG ELECTRONICS CO., LTD., Suwon-si, Gyeonggi-do (KR)
(72) Inventor: Kim, Seon Goo, 963-, Yeongtong-Dong, Yeongton-Gu, Suwon (KR)
(74) Representative: Davies, Robert Ean

(57) **Abstract**

A washing machine having a stator (40) mounted to a bearing housing (60). The stator (40) including a magnetic core (41) and upper (42) and lower (43) insulating members to cover upper and lower surfaces of the magnetic core, respectively. At least one of the upper (42) and lower (43) insulating members has a ring-shaped flange (45), which extends inward from the inner circumferential surface thereof. The flange (45) has a plurality of first mounting holes (46) and the bearing housing (60) has a plurality of second mounting holes (62) corresponding to the first mounting holes (46), respectively, whereby the stator (40) is bolted to the bearing housing (60). The flange (45) has a positioning protrusion (48) extending upward, and the bearing housing (60) has a positioning groove (63) formed at a rim thereof such that the positioning protrusion (48) is inserted into the positioning groove (63). The flange (45) is positioned at the bearing housing (60) while the first mounting holes (46) of the flange are aligned with the second mounting holes (62) of the bearing housing (60), respectively.

## Description

Apparatus consistent with the present invention relate to a washing machine, and, more particularly, but not exclusively, to a washing machine having an improved structure of a stator mounted to an outer surface of a water tub, thereby reducing material costs of the stator and accomplishing easy and quick assembly of the stator.

When laundry is washed by a washing machine, a rotary tub is rotated in alternating directions. When the washed laundry is dewatered by the washing machine, on the other hand, the rotary tub is rotated only in one direction at high speed. Consequently, the rotary tub is rotatably disposed in a water tub, in which wash water is filled, and at the outside of the water tub is disposed a driving motor to rotate the rotary tub.

One example of a washing machine is disclosed in U.S. Patent No. 6,510,716, which provides a water tub; a rotary tub rotatably disposed in the water tub while being attached to a rotary shaft extending through the water tub for washing the laundry; and a driving motor disposed at the outside of the water tub for rotating the rotary shaft and the rotary tub. The driving motor includes a stator mounted in a bearing housing mounted to the outer surface of the water tub; and a rotor disposed around the stator while being connected to the rotary shaft.

The stator includes a ring-shaped magnetic core composed of magnetic laminations having a predetermined shape and size; upper and lower insulating members to cover the upper and lower surfaces of the magnetic core, respectively; and a coil wound on the magnetic core.

In the washing machine of U.S. Patent No. 6,510,716, however, the magnetic core has a plurality of ribs, which are protruded inward, to attach the stator to the bearing housing. As a result, the length of each magnetic lamination constituting the magnetic core must be further increased by the length of each protruded rib, which increases the material costs of the stator. Furthermore, it is very difficult to arrange bolt holes formed at each rib and bolt holes formed at the bearing housing in a straight line such that the bolt holes of each rib communicate with the corresponding bolt holes of the bearing housing when bolts are inserted through the bolt holes of the ribs and bolt holes of the bearing housing, respectively. As a result, attaching the stator to the bearing housing is not easily and quickly performed.

Therefore, it is an aim of embodiments of the invention to provide a washing machine having an improved structure of a stator mounted to a bearing housing, thereby reducing material costs of the stator and accomplishing easy and quick assembly of the stator.

In accordance with a first aspect, the present invention provides a washing machine comprising: a water tub; a bearing housing fixed to the water tub; and a stator mounted to the bearing housing, wherein the stator comprises a magnetic core and an insulating member to cover the magnetic core, and wherein the bearing housing has a positioning groove, and the insulating member has a positioning protrusion, which is inserted into the positioning groove of the bearing housing such that the stator is quickly positioned at the bearing housing.

In an exemplary embodiment, the insulating member has a flange, by which the stator is mounted to the bearing housing. The positioning groove is formed at the rim of the bearing housing, and the positioning protrusion extends upward from the flange at the position corresponding to the rim of the bearing housing. The insulating member comprises upper and lower insulating members to cover the upper and lower surfaces of the magnetic core, respectively, and the flange extends inward from the inner circumferential surface of at least one of the upper and lower insulating members, the flange being formed in the shape of a ring. The flange has a plurality of first mounting holes, and the bearing housing has a plurality of second mounting holes corresponding to the first mounting holes, respectively, whereby the stator is bolted to the bearing housing while the positioning protrusion is inserted in the positioning groove. The flange has a ring-shaped protrusion extending upward such that the ring-shaped protrusion is fitted onto the rim of the bearing housing, and the positioning protrusion extends inward from the ring-shaped protrusion.

In an embodiment, the flange is formed at the upper insulating member with a predetermined thickness, whereby the stator is mounted to the bearing housing through the upper insulating member.

In a further embodiment, the flange is formed at both the upper and lower insulating members, whereby the stator is mounted to the bearing housing through the upper and lower insulating members. In this embodiment, the stator further comprises a plurality of supporting pipes connecting the first mounting holes of the upper insulating member and the first mounting holes of the lower insulating member, respectively, whereby the stator is mounted to the bearing housing by a plurality of mounting bolts, which are supported by the supporting pipes, respectively.

In accordance with a second aspect, there is provided a washing machine comprising: a water tub; a rotary tub disposed in the water tub; a bearing housing mounted to an outer surface of the water tub; a rotary shaft mounted to the rotary tub and extending through the bearing housing; a stator mounted to the bearing housing; and a rotor mounted to the rotary shaft so as to be disposed opposite to the stator, wherein the stator comprises: a magnetic core having an upper surface and a lower surface; and an upper insulating member and a lower insulating member to cover the upper and lower surfaces of the magnetic core, respectively, and wherein at least one of the upper and lower insulating members has a ring-shaped flange, which extends inward from the inner circumferential surface thereof, and the stator is mounted to the bearing housing through the flange.

Additional aspects and features of the invention will be set forth in part in the description which follows and, in part, will be obvious from the description, or may be learned by practice of the invention.

For a better understanding of the invention, and to show how embodiments of the same may be carried into effect, reference will now be made, by way of example, to the accompanying diagrammatic drawings in which:
FIG. 1 is a longitudinal sectional view showing a washing machine according to an exemplary embodiment of the present invention;
FIG. 2 is an exploded perspective view showing a driving motor disposed at the outside of a water tub of the washing machine shown in FIG. 1;
FIG. 3 is an exploded perspective view showing a stator according to an exemplary embodiment of the present invention;
FIG. 4 is a perspective view showing the mounting structure between the stator of FIG. 3 and a bearing housing of the water tub;
FIG. 5 is a sectional view showing the stator of FIG. 4 mounted to the bearing housing;
FIG. 6 is an exploded perspective view showing a stator according to an exemplary embodiment of the present invention;
FIG. 7 is a perspective view showing the mounting structure between the stator of FIG. 6 and the bearing housing of the water tub; and
FIG. 8 is a sectional view showing the stator of FIG. 7 mounted to the bearing housing.

Reference will now be made in detail to exemplary embodiments of the present invention. The embodiments are described below to explain the present invention by referring to the figures.

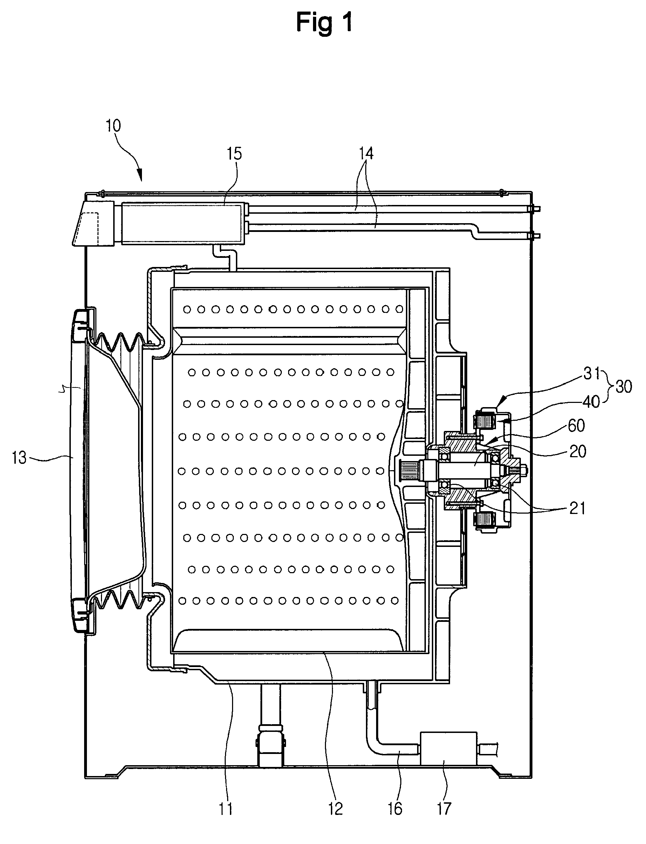

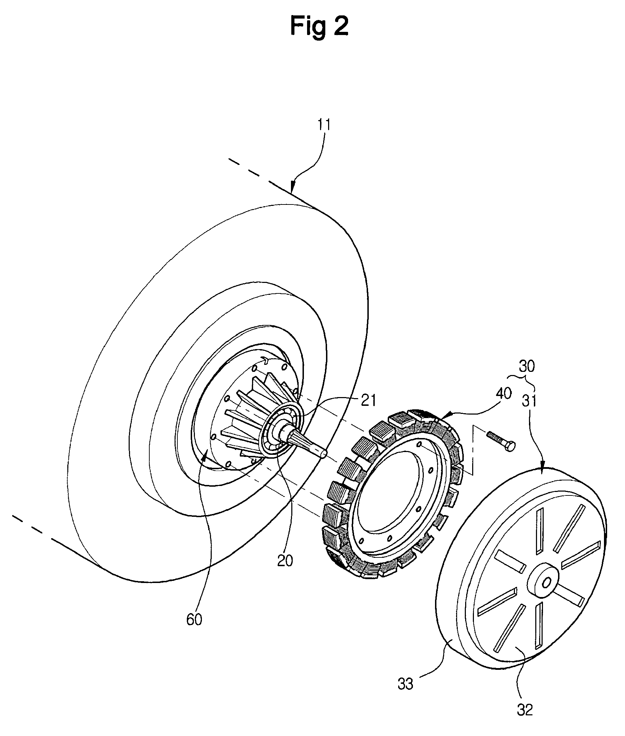

FIG. 1 is a longitudinal sectional view showing a washing machine according to an embodiment of the present invention, and FIG. 2 is an exploded perspective view showing a driving motor disposed at the outside of a water tub of the washing machine shown in FIG. 1.

As shown in FIG. 1, the washing machine includes a housing 10 forming the appearance of the washing machine; a water tub 11 disposed in the housing 10 for storing wash water; a rotary tub 12 rotatably disposed in the water tub 11 for washing the laundry; and a door 13 hingedly attached to the front surface of the housing 10.

At the upper part of the housing 10 are disposed a water supply hose 14 to supply wash water to the water tub 11 and a detergent supply unit 15 to supply detergent to the water tub 11. At the lower part of the housing 10 are disposed a drain hose 16 and a drain pump 17 to discharge wash water in the water tub 11 out of the housing 10.

At the outside of the water tub 11 is disposed a driving motor 30 to rotate the rotary tub 12 in alternating directions. Between the rotary tub 12 and the driving motor 30 is disposed a rotary shaft 20, having one end connected to the rotary tub 12 and the other end connected to the driving motor 30, to transmit a rotating force of the driving motor 30 to the rotary tub 12. The rotary shaft 20 extends through the water tub 11.

As shown in FIG. 2, the driving motor 30 includes a ring-shaped stator 40 mounted to the outer surface of the water tub 11; and a rotor 31 disposed around the stator 40 while being connected to the rotary shaft 20.

To the center of the outer surface of the water tub 11 is fixed a bearing housing 60, by which the stator 40 is mounted to the water tub 11. The bearing housing 60 is provided at the inner circumferential surface thereof with bearing members 21, by which the rotary shaft 20 is rotatably inserted through the water tub 11.

Consequently, as shown in FIG. 1, the stator 40 is mounted to the bearing housing 60, and the rotor 31 is directly connected to the rotary shaft 20, which extends through the bearing housing 60 while being supported by the bearing members 21, and is disposed opposite to the outer circumferential surface of the stator 40, for rotating the rotary shaft 20 and the rotary tub 12.

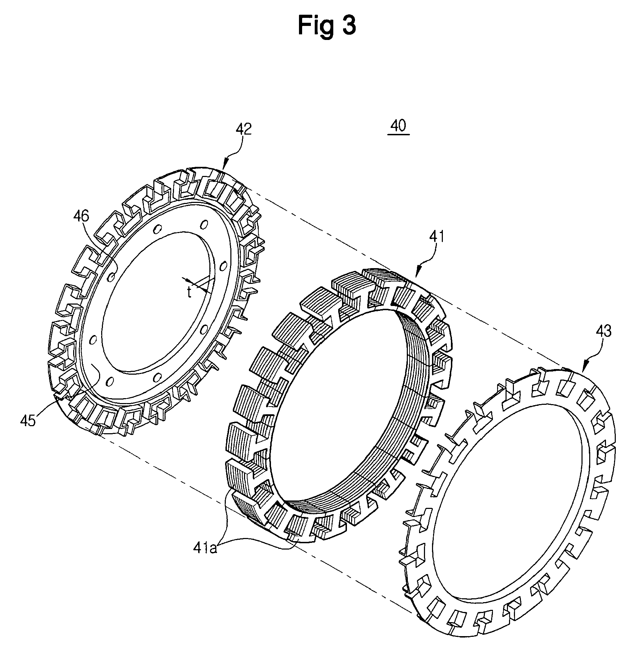

The structure of a stator 40 according to a first exemplary embodiment of the present invention and the mounting structure between the stator 40 and the bearing housing 60 will be described hereinafter with reference to FIGS. 3 to 5.

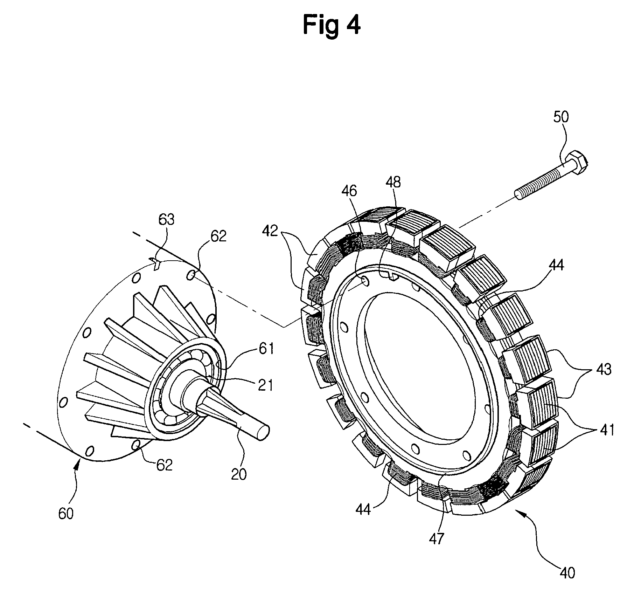

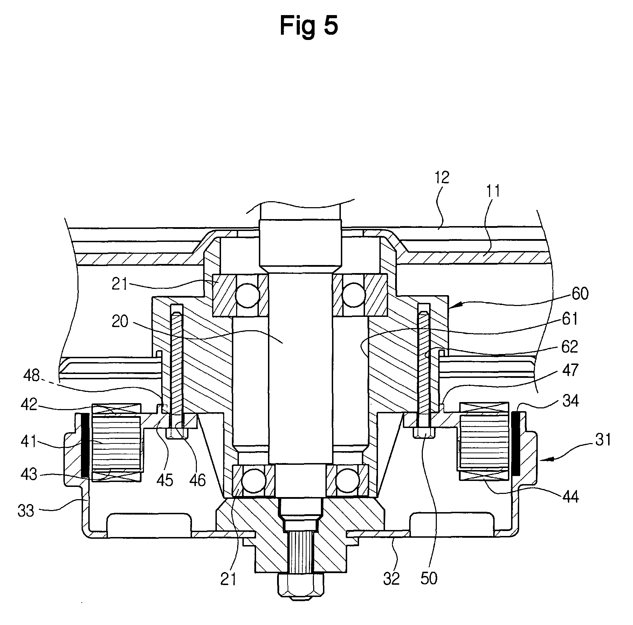

FIG. 3 is an exploded perspective view showing the stator 40. FIG. 4 is a perspective view showing the mounting structure between the stator 40 of FIG. 3 and the bearing housing 60, and FIG. 5 is a sectional view showing the stator 40 of FIG. 4 mounted to the bearing housing 60.

As shown in FIGS. 3 to 5, the stator 40 includes a ring-shaped magnetic core 41; upper and lower insulating members 42 and 43 to cover the upper and lower surfaces of the magnetic core 41, respectively, to electrically insulate the upper and lower surfaces of the magnetic core 41; and a coil 44 to supply electric current to the magnetic core 41.

The rotor 31 includes a disk-shaped base 32, to which the rotary shaft 20 is connected; an outer circumferential extension 33 vertically extending from the rim of the base 32; and a plurality of magnets 34 attached to the outer circumferential extension 33, while being spaced a predetermined distance from each other.

The magnetic core 41 of the stator 40 is composed of ring-shaped magnetic laminations having a predetermined shape. The magnetic core 41 has a predetermined width, which corresponds to the length between the inner and outer circumferential surfaces thereof, and a predetermined thickness, which corresponds to the length between the upper and lower surfaces thereof. The upper and lower insulating members 42 and 43 are disposed on the upper and lower surfaces of the magnetic core 41 to cover the upper and lower surfaces of the magnetic core 41, respectively. The coil 44 is wound on the magnetic laminations 41a while the magnetic core 41 is covered by the upper and lower insulating members 42 and 43.

The upper and lower insulating members 42 and 43 correspond in shape to the upper and lower surfaces of the magnetic core 41, respectively, such that the upper and lower insulating members 42 and 43 are attached to the upper and lower surfaces of the magnetic core 41, respectively.

As described above, the upper and lower insulating members 42 and 43 are attached to the magnetic core 41, and the coil 44 is wound on the magnetic laminations 41a. In this way, the stator 40 is prepared. In order to mount the prepared stator 40 to the bearing housing 60, the upper insulating member 42 is provided with a ring-shaped flange 45, which integrally extends inward from the inner circumferential surface of the upper insulating member 42.

In the first embodiment of the present invention, the stator 40 is mounted to the bearing housing 60 by the ring-shaped flange 45 integrally formed at the upper insulating member 42. As a result, it is not necessary to provide a mounting structure between the magnetic core 41 and the bearing housing 60. Consequently, the size of each magnetic lamination 41 a is reduced, and therefore, the material costs of the magnetic core 41 are decreased.

In order to mount the upper insulating member 42 of the stator 40 to the bearing housing 60 with sufficient mounting strength, the flange 45 has a thickness t larger than other parts of the upper insulating member 42. At the flange 45 are formed a plurality of first mounting holes 46, through which the flange 45 is mounted to the bearing housing 60. The first mounting holes 46 are spaced a predetermined distance from each other.

It is also possible for the flange 45 to be formed not at the upper insulating member 42 but at the lower insulating member 43. Otherwise, flanges 45 may be formed not only at the upper insulating member 42, but also at the lower insulating member 43 such that the stator 40 is mounted to the bearing housing 60 through the upper and lower insulating members 42 and 43.

The bearing housing 60, approximately formed in the shape of a cylinder, is provided at the center thereof with a through-hole 61. The bearing members 21 are disposed at the upper and lower end of the through-hole 61, respectively. At the edge of the bearing housing 60 are formed a plurality of second mounting holes 62, which are spaced a predetermined distance from each other in the circumferential direction. The second mounting holes 62 correspond to the first mounting holes 46 formed at the flange 45 of the upper insulating member 42.

In order to arrange the first mounting holes 46 and the second mounting holes 62 in a straight line such that the first mounting holes 46 communicate with the corresponding second mounting holes 62 when the stator 40 is mounted to the bearing housing 60, a ring-shaped protrusion 47 is formed at the interface between the inner circumferential surface of the upper insulating member 42 and the flange 45. The ring-shaped protrusion 47 extends upward toward the bearing housing 60. At one side of the ring-shaped protrusion 47 is formed a positioning protrusion 48, which extends from the ring-shaped protrusion 47 toward the inner circumferential surface of the upper insulating member 42.

The length from the center of the stator 40 to the ring-shaped protrusion 47 is equal to the length from the center to the rim of the bearing housing 60. Consequently, when the stator 40 is mounted to the bearing housing 60, the ring-shaped protrusion 47 is fitted onto the rim of the bearing housing 60. At a predetermined position of the rim of the bearing housing 60 is formed a positioning groove 63, which corresponds to the positioning protrusion 48 of the stator 40.

When the ring-shaped protrusion 47 is fitted onto the rim of the bearing housing 60, and the positioning protrusion 48 is inserted into the positioning groove 63, the stator is not moved relative to the bearing housing 60 while the first mounting holes 46 are aligned with the second mounting holes 62, respectively.

As mounting bolts are inserted through the first mounting holes 46 and the second mounting holes 62, respectively, in the above-mentioned state, the stator 40 is easily and quickly mounted to the bearing housing 60. Subsequently, the rotary shaft 20 is fixed to the center of the rotor 31. As a result, the magnets 34 of the rotor 31 are disposed opposite to the outer circumferential surface of the stator 40, and therefore, the rotary shaft 20 and the rotary tub 12 are rotated by the driving motor 30.

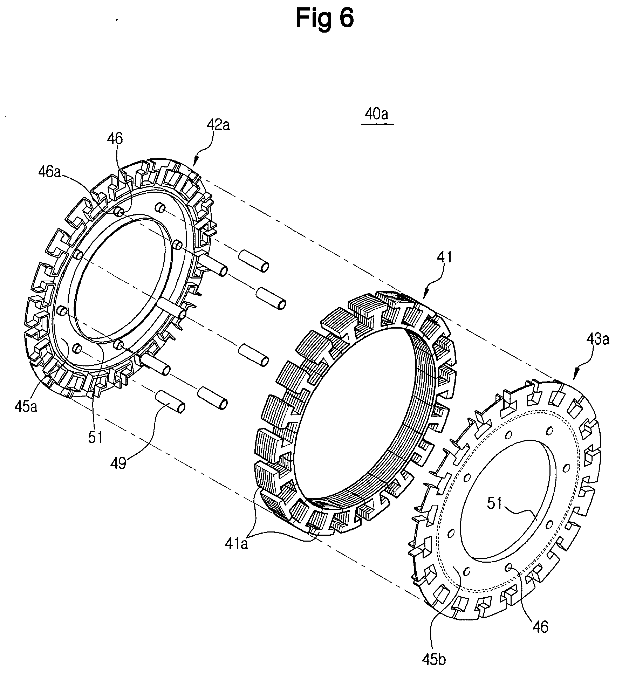

The structure of a stator 40a according to a second exemplary embodiment of the present invention and the mounting structure between a stator 40a and the bearing housing 60 will be described hereinafter with reference to FIGS. 6 to 8.

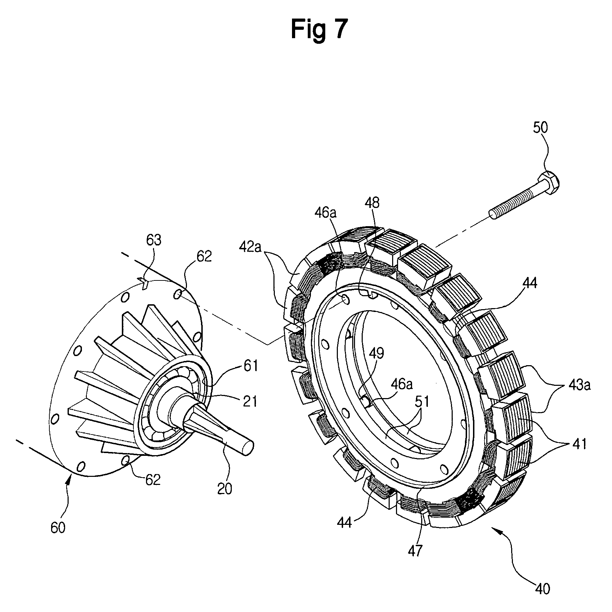

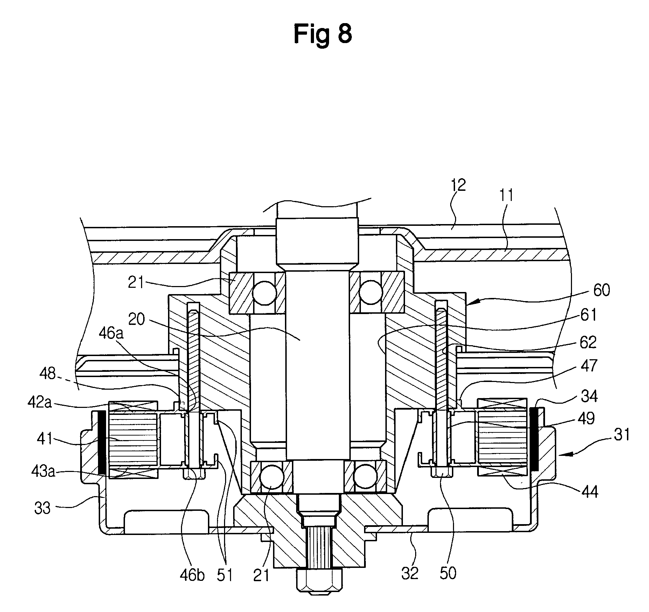

FIG. 6 is an exploded perspective view showing the stator 40a, FIG. 7 is a perspective view showing the mounting structure between the stator 40a of FIG. 6 and the bearing housing 60, and FIG. 8 is a sectional view showing the stator 40a of FIG. 7 mounted to the bearing housing 60.

As shown in FIGS. 6 to 8, the stator 40a includes a ring-shaped magnetic core 41, which is identical in structure to that of the stator 40 according to the first embodiment; and upper and lower insulating members 42a and 43a to cover the upper and lower surfaces of the magnetic core 41, respectively. The upper and lower insulating members 42a and 43a are provided with flanges 45a and 45b, which extend inward from the inner circumferential surfaces thereof, respectively.

In the stator 40a according to the second embodiment, the flanges 45a and 45b are formed at the upper and lower insulating members 42a and 43a, respectively, such that the stator 40a is mounted to the bearing housing 60 through the upper and lower insulating members 42a and 43a, which is distinguished from the stator 40 according to the first embodiment.

The flange 45a has a thickness equal to that of the upper insulating member 42a, and the flange 45b has a thickness equal to that of the lower insulating member 43a. At the flanges 45a and 45b are formed pluralities of first mounting holes 46, respectively, which are spaced a predetermined distance from each other in the circumferential direction thereof. At the rim of each first mounting hole 46 is formed a boss 46a, which extends toward the magnetic core 41. On each boss 46a is fitted a supporting pipe 49, by which each first mounting hole 46 formed at the flange 45a of the upper insulating member 42a is connected to each first mounting hole 46 formed at the flange 45b of the lower insulating member 43a.

In order to arrange the first mounting holes 46 and the second mounting holes 62 in a straight line such that the first mounting holes 46 communicate with the corresponding second mounting holes 62, the stator 40a is provided with a ring-shaped protrusion 47 and a positioning protrusion 48, and a positioning groove 63 is formed at a predetermined position of the rim of the bearing housing 60. The ring-shaped protrusion 47 of the stator 40a is fitted onto the rim of the bearing housing 60, and the positioning protrusion 48 of the stator 40a is inserted into the positioning groove 63 of the bearing housing 60.

After the positioning protrusion 48 of the stator 40a is inserted into the positioning groove 63 of the bearing housing 60, and therefore, the first mounting holes 46 are aligned with the corresponding second mounting holes 62, mounting bolts 50 are threadly coupled into the second mounting holes 62 through the first mounting holes 46 formed at the flange 45a of the upper insulating member 42a and the first mounting holes 46 formed at the flange 45b of the lower insulating member 43a along the supporting pipes 49 fitted on the bosses 46a of the upper insulating member 42a and the bosses 46a of the lower insulating member 43a, respectively. As a result, the stator 40a is mounted to the bearing housing 60.

In the stator 40a with the above-stated construction according to the second embodiment, the mounting strength is increased by the supporting pipes 49 connected in communication between the mounting holes 46 of the upper insulating member 42a and the mounting hole 46 of the lower insulating member 43a. Consequently, the flanges 45a and 45b formed at the upper and lower insulating members 42a and 43a may have the same thickness as the upper and lower insulating members 42a and 43a, respectively.

Also, ring-shaped reinforcing ribs 51 may be formed at the inner ends of the flanges 45a and 45b such that the flanges 45a and 45b of the upper and lower insulating members 42a and 43a are securely maintained without deformation.

As apparent from the above description, the stator is mounted to the bearing housing by the ring-shaped flange formed at least at one of the upper and lower insulating members that cover the upper and lower surfaces of the magnetic core, respectively, and the positioning protrusion formed at the flange is inserted into the positioning groove formed at the rim of the bearing housing such that the stator is not moved relative to the bearing housing. Consequently, embodiments of the present invention have the effect of reducing the material costs of the magnetic core and provides for easy and quick mounting of the stator to the bearing housing, and therefore, reduces the manufacturing costs of the washing machine.

Although a few embodiments of the present invention have been shown and described, it would be appreciated by those skilled in the art that changes may be made in the embodiments without departing from the principles and spirit of the invention, the scope of which is defined in the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A washing machine comprising:
a water tub (11);
a bearing housing (60) fixed to the water tub; and
a stator (60) mounted to the bearing housing, wherein
the stator comprises a magnetic core (41) and an insulating member (42, 43) that covers the magnetic core, and
the bearing housing has a positioning groove (63), and the insulating member has a positioning protrusion (48), which is arranged to be inserted into the positioning groove of the bearing housing such that the stator is positioned at the bearing housing.

2. The washing machine according to claim 1, wherein the insulating member (42, 43) has a flange (45), by which the stator (40) is mounted to the bearing housing.

3. The washing machine according to claim 2, wherein the positioning groove (63) is provided at a rim of the bearing housing (60), and the positioning protrusion (48) extends from the flange (45) at a position corresponding to the rim of the bearing housing.

4. The washing machine according to claim 3, wherein the insulating member comprises an upper insulating member (42) and a lower insulating member (43) to cover the upper and lower surfaces of the magnetic core (41), respectively, and the flange (45) extends inward from the inner circumferential surface of at least one of the upper and lower insulating members, the flange being in the shape of a ring.

5. The washing machine according to claim 4, wherein the flange (45) has a plurality of first mounting holes (46), and the bearing housing (60) has a plurality of second mounting holes (62) corresponding to the first mounting holes (46), respectively, such that the stator (40) is arranged to be bolted to the bearing housing and the positioning protrusion (48) is arranged to be inserted in the positioning groove (63).

6. The washing machine according to any of claims 3-5, wherein the flange (45) has a ring-shaped protrusion (47) such that the ring-shaped protrusion is fitted onto the rim of the bearing housing (60), and the positioning protrusion (48) extends inward from the ring-shaped protrusion (47).

7. The washing machine according to claim 5 or 6, wherein the flange (45) is provided at the upper insulating member (42) with a predetermined thickness, and the stator (40) is mounted to the bearing housing (60) through the upper insulating member (42).

8. The washing machine according to claim 5 or 6, wherein both the upper (42) and lower (43) insulating members include the flange (45), and the stator (40) is mounted to the bearing housing (60) through the upper and lower insulating members.

9. The washing machine according to claim 8, wherein the stator (40) further comprises a plurality of supporting pipes (49) connecting the first mounting holes (46) of the upper insulating member (42) and the first mounting holes (46) of the lower insulating member (43), respectively, and the stator is mounted to the bearing housing (60) by a plurality of mounting bolts (50), which are supported by the supporting pipes, respectively.

10. A washing machine comprising:
a water tub (11);
a rotary tub (12) disposed in the water tub;
a bearing housing (60) mounted to an outer surface of the water tub (11);
a rotary shaft (20) mounted to the rotary tub (12) and extending through the bearing housing (60);
a stator (40) mounted to the bearing housing (60); and a rotor (30) mounted to the rotary shaft (20) so as to be disposed opposite to the stator (40), wherein
the stator comprises:
a magnetic core (41) having an upper surface and a lower surface; and
an upper insulating member (42) and a lower insulating member (43) to cover the upper and lower surfaces of the magnetic core, respectively, and wherein
at least one of the upper and lower insulating members has a ring-shaped flange (45), which extends inward from the inner circumferential surface thereof, and the stator (40) is mounted to the bearing housing (60) through the flange (45).

11. The washing machine according to claim 10, wherein the flange (45) has a plurality of first mounting holes (46), which are disposed to be spaced a predetermined distance from each other, and the bearing housing (60) has a plurality of second mounting holes (62) corresponding to the first mounting holes (46), respectively, and the stator (40) is arranged to be bolted to the bearing housing (60).

12. The washing machine according to claim 11, wherein the flange (45) has a positioning protrusion (48), and the bearing housing (60) has a rim and a positioning groove (63) provided at a predetermined position of the rim thereof such that the positioning protrusion (48) is inserted into the positioning groove (63), and the flange (45) is positioned at the bearing housing (60) such that the first mounting holes (46) of the flange are aligned with the second mounting holes (62) of the bearing housing, respectively.

13. The washing machine according to any of claims 10-12, wherein the flange (45) is provided at the upper insulating member (42) with a predetermined thickness, and the stator (40) is mounted to the bearing housing (60) through the upper insulating member (42).

14. The washing machine according to any of claims 10-13, wherein both the upper (42) and lower (43) insulating members have the ring-shaped flange (45), and the stator (40) is mounted to the bearing (60) housing through the upper and lower insulating members.
